# NEUE EUROPÄISCHE PATENTSCHRIFT

(11) **EP 0 736 060 B2**
(45) Veröffentlichungstag und Bekanntmachung des Hinweises auf die Entscheidung über den Einspruch: **25.04.2001**
(45) Hinweis auf die Patenterteilung: 30.07.1997
(21) Anmeldenummer: 95903818.3
(22) Anmeldetag: 19.12.1994
(51) Int. Cl.: C08J 9/10, A61L 15/00, C08F 220/06, C09K 17/00

(54) **VERNETZTE SYNTHETISCHE POLYMERISATE MIT PORÖSER STRUKTUR**
CROSS-LINKED POLYMERS WITH A POROUS STRUCTURE
POLYMERISATS SYNTHETIQUES RETICULES A STRUCTURE POREUSE

(30) Priorität: 23.12.1993 DE 4344224
(43) Veröffentlichungstag der Anmeldung: 09.10.1996
(73) Patentinhaber: STOCKHAUSEN GmbH & Co. KG, 47805 Krefeld (DE)
(72) Erfinder: CHMELIR, Miroslav, D-47803 Krefeld (DE)
(74) Vertreter: Wolff, Felix, Dr.
(86) Internationale Anmeldenummer: EP9404221
(87) Internationale Veröffentlichungsnummer: WO9517455

(56) Entgegenhaltungen:
- EP-A- 0 303 518
- EP-A- 0 304 319
- EP-A- 0 347 241
- AT-B- 391 321
- DE-A- 3 637 057
- JP-A- 1 126 310
- JP-A- 1 304 127
- JP-A- 58 071 907
- JP-A- 59 018 712
- US-A- 4 618 631
- DATABASE WPI Week 8816, 11. März 1988 Derwent Publications Ltd., London, GB; AN 88-108469 'Manufacturing resin having high water absorbing property.' & JP,A,63 056 511 (OSAKA YUKIKGAKU K.) 11. März 1988
- DATABASE WPI Week 8816, 11. März 1988 Derwent Publications Ltd., London, GB; AN 88-108469 'Manufacturing resin having high water absorbing property.' & JP-A-63 056 511

## Beschreibung

Die Erfindung betrifft vernetzte synthetische Polymerisate auf Basis der Acrylsäure und ihrer Derivate mit hohem Aufnahmevermögen und verbesserter Aufnahmegeschwindigkeit für Wasser, wäßrige Lösungen und Körperflüssigkeiten, ein Verfahren zu ihrer Herstellung durch radikalische Polymerisation unter solchen Bedingungen, die zu Polymerisaten führen, die eine poröse Struktur und eine vom Quellungsgrad abhängige Partikeldichte aufweisen, so daß die Polymerpartikel in Wasser oder wäßrigen Flüssigkeiten schwimmfähig sind sowie die Verwendung dieser Polymerisate zur Absorption und/oder Retention von Wasser oder wäßrige Lösungen und zur Abgabe von Wasser und/oder einer Wirkstofflösung an ein umgebendes Medium.

Verschiedene synthetische Polymerisate, die ein Absorptionsvermögen für Wasser und Körperflüssigkeiten aufweisen, sind in zahlreichen Patenten beschrieben: z.B. vernetzte Polymere und Copolymere auf Acryl- oder Methacryl-säurebasis (US 4 018 951, US 4 066 583, US 4 062 817, US 4 066 583, DE-OS 26 13 135, DE-OS 27 12 043, DE-OS 28 13 634) oder Acrylamidopropansulfonsäurecopolymerisate (DE-PS 31 24 008). Diese Absorptionsmittel sind praktisch wasserunlöslich und absorbieren im Gleichgewicht mit waßrigen Flüssigkeiten das Vielfache ihres Gewichts an Wasser, Urin oder anderen wäßrigen Lösungen. Neben einem hohen Flüssigkeitsaufnahmevermögen werden auch weitere Eigenschaften der synthetischen Absorptionsmittel, wie z.B. niedriger Restmonomergehalt, niedriger Anteil an wasserlöslichen Anteilen und hohe Gelfestigkeit der gequollenen Polymerpartikel in einigen Patentschriften angegeben.

In US 4 529 739 und US 4 649 164 sind Polymerisate mit poröser Struktur auf der Basis von Methacrylsäure beschrieben, die aus Ethylacrylat/Methacrylsäure-Copolymerisat-Latices durch Zugabe von Verbindungen, die Kohlendioxid abspalten können, wie z.B. Natriumhydrogencarbonat, erhalten wurden. Im österreichischen Patent AT 391 321 B werden vernetzte, poröse Acrylpolymere, hergestellt durch Zusatz eines stickstoffhaltigen Treibmittels zur Monomerlösung, beschrieben. Nach diesem Verfahren wird zu Acrylsäure, die zu 60 - 100 % mit NaOH, KOH oder NH₃ neutralisiert ist, vor oder nach der Polymerisation ein N-haltiges Treibmittel gegeben, das sich während der Trocknung bei 80 bis 250°C zu Ammoniak und Kohlendioxid zersetzt, wobei die zugesetzte Menge einer Erhöhung des Neutralisationsgrades auf 102 bis 140 % entspricht. Als Treibmittel werden Ammoniumsalze von anorganischen oder organischen Säuren und Harnstoff genannt, wobei Ammoniumcarbonat bevorzugt wird. Weiterhin werden auch in US 5 118 719 Ammonium- und Alkalicarbonate als Treibmittel beschrieben, die zur Monomerlösung vor der Polymerisation zugesetzt werden. Durch den Carbonatzerfall während der Polymerisation entsteht Kohlendioxid und bewirkt dann im Hydrogel die Bildung einer "mikrocellularen Struktur", womit die verbesserte Aufnahmegeschwindigkeit für Flüssigkeiten beim Endprodukt erklärt werden kann.

Die Verwendung von Alkali- bzw. Ammoniumcarbonaten vor oder während der Polymerisation von organischen Säuren gemäß den US 4 529 739, US 4 649 164 und US 5 118 719 führt zur Bildung des Kohlendioxids während der Neutralisation der Monomerlösung. Wegen der begrenzten Löslichkeit von CO₂ in der Monomerlösung und in der Polymergelmasse können nur relativ kleine Mengen von CO₂ in das Polymerisat während der Polymerisation oder Trocknung eingebaut werden. Auch die zweite Variante gemäß der AT 391 321 B, die Zugabe des Treibmittels zum Polymerisatgel vor der Trocknung, bringt nicht den gewünschten Effekt, bedingt durch die oberflächliche Wirkung der Nachbehandlung und diese Methode ist mit dem Nachteil verbunden, die zusätzliche Wassermenge bei der Trocknung zu entfernen. Eine übermäßige Verwendung von Ammoniak führt ebenfalls nicht zu stark porösen Strukturen im gequollenen Gelzustand, da Ammoniak in Wasser oder wäßrigen Flüssigkeiten gut löslich ist, so daß es während des Quellvorganges gelöst wird und die poröse Struktur der Hydrogelpartikel weitgehend verschwindet. Weiterhin wird der pH-Wert des Endprodukts durch den Ammoniak- oder Carbonatzusatz weit über 7 erhöht, wodurch die Anwendung der Produkte stark eingeschränkt ist.

In der WO 88/09801 wird, ausgehend von einem wasserlöslichen Polymerisat auf Acrylsäurebasis, die Herstellung eines vernetzten aufgeschäumten Ethylacrylat/Acrylsäure-Copolymerisats mit einer spezifischen Dichte von 0,20 g/ cm³ beschrieben. Das Endprodukt wurde in wässriger Lösung hergestellt, wobei eine nachträgliche Vernetzung und Aufschäumung unter Zusatz eines Vernetzers und eines Treibmittels, z.B. Natriumhydrogencarbonat, p-Toluosulfonylhydrazin oder Azocarbonamid, in einem Verfahrenschritt durchgeführt werden. Nachteilig an diesem Verfahren ist die Notwendigkeit, in einer wässrigen Lösung arbeiten zu müssen, wobei zur Handhabung des Copolymerisats die Konzentration wegen der hohen Viskosität, beispielsweise auf 18 Gew.% begrenzt wird. Weiterhin ist es erforderlich, große Treibmittelmengen, beispielsweise 27 Gew.% bezogen auf das Copolymerisat, zu verwenden.

Wie aus AT 391 321 B bekannt ist, werden üblicherweise Azoverbindungen in sehr geringer Menge, beispielsweise zu 0,056 Gew.% bezogen auf das Monomere als Polymerisations-Initiatoren benutzt, wobei durch Verwendung höherer Konzentrationen solcher Radikalbildner der Überschuß an freien Radikalen zu Polymerisaten mit geringerer Molmasse und zu Produkten mit unzureichenden Absorbereigenschaften führt.

Die bekannten Wasser oder wäßrige Flüssigkeiten absorbierenden Polymerisate zeichnen sich weiterhin dadurch aus, daß sie beim Einbringen in Wasser oder wäßrige Flüssigkeiten im ungequollenem Zustand und nach Flüssigkeitsaufnahme nicht auf der Flüssigkeitsoberfläche schwimmfähig sind, sofern sie nicht Hilfsmittel, wie Korkmehl, wie in EP 0 285 404 B1 beschrieben, enthalten.

Es bestand daher die Aufgabe, unterl Vermeidung der genannten Nachteile Absorptionsmittel mit poröser Struktur, guten Absorptionseigenschaften, wie insbesondere verbesserter Aufnahmegeschwindigkeit sowie mit niedriger durchschnittlicher Gesamtdichte der einzelnen Partikel zu erhalten, so daß die Polymerpartikel insbesondere im aufgequollenen Zustand auf der Wasseroberfläche schwimmfähig sind.

Es wurde nun überraschenderweise gefunden, daß wasserquellbare, vernetzte, partikelförmige Polymerisate gemäß Anspruch 1 mit poröser Struktur und hoher Aufnahmegeschwindigkeit für Wasser und wäßrige Flüssigkeiten und einer Dichte unter 1,0 g/cm³ im gequollenen Zustand und einer Dichte über 1,0 g/cm³ im trockenen Zustand durch radikalische Polymerisation in wäßriger Lösung unter Verwendung mindestens einer Azoverbindung gleichzeitig als Polymerisationsinitiator und Treibmittel in höheren Konzentration hergestellt werden können. Als geeignete Azoverbindungen können solche verwendet werden, die eine Halbwertszeit von 10 Stunden oder darüber, bei einer Temperatur im Bereich von 30 bis 120°C, vorzugsweise im Temperaturbereich von 60 bis 120°C haben. Die Azoverbindungen werden der Monomerenlösung vor der Polymerisation zugesetzt. Es werden folgende Azoverbindungen vorzugsweise verwendet
1. Azonitril-Verbindungen:
   2,2'-Azobis(4-methoxy-2,4-dimethylvaleronitril),
   2,2'-Azobis(2-cyclopropylpropionitril),
   2,2'-Azobis(2,4-dimethylvaleronitril),
   2,2'-Azobis(2-methylpropionitril),
   2,2'-Azobis(2-methylbutyronitril),
   1,1'-Azobis(cyclohexan-1-carbonitril),
   1-[(1-Cyano-1-methylethyl)azo]formamid (2-(Carbamoylazo)isobutyronitril) und 2-Phenylazo-4-methoxy-2,4-dimethylvaleronitril.
2. Azoamidin-Verbindungen:
   2,2'-Azobis(2-methyl-N-phenylpropionamidin) dihydrochlorid,
   2,2'-Azobis[N-(4-chlorophenyl)-2-methylpropionamidin] dihydrochlorid,
   2,2'-Azobis[N-(4-hydroxyphenyl)-2-methylpropionamidin] dihydrochlorid,
   2,2'-Azobis[N-(4-aminophenyl)-2-methylpropionamidin] tetrahydrochlorid,
   2,2'-Azobis[2-methyl-N-(phenylmethyl)-propionamidin] dihydrochlorid,
   2,2'-Azobis[2-methyl-N-2-propenylpropionamidin] dihydrochlorid,
   2,2'-Azobis(2-methylpropionamidin) dihydrochlorid und
   2,2'-Azobis[N-(2-hydroxyethyl)-2-methyl-propionamidin] dihydrochlorid.
3. Cyklische Azoamidin-Verbindungen:
   2,2'-Azobis[2-(5-methyl-2-imidazolin-2-yl)propan] dihydrochlorid,
   2,2'-Azobis[2-(2-imidazolin -2-yl)propan] dihydrochlorid,
   2,2'-Azobis[2-(4,5,6,7-tetrahydro-1 H-1,3-diazepin-2-yl)propan] dihydrochlorid,
   2,2'-Azobis[2-(3,4,5,6-tetrahydropyrimidin-2-yl)propan] dihydrochlorid,
   2,2'-Azobis[2-(5-hydroxy-3,4,5,6-tetrahydropyrimidin-2-yl)propan] dihydrochlorid,
   2,2'-Azobis{2-[1-(2-hydroxyethyl)-2-imidazolin-2-yl]propan} dihydrochlorid und
   2,2'-Azobis[2-(2-imidazolin-2-yl)propan].
4. Azoamid-Verbindungen:
   2,2'-Azobis{2-methyl-N-[1,1-bis(hydroxymethyl)-2-hydroxyethyl]propionamid},
   2,2'-Azobis{2-methyl-N-[1,1-bis(hydroxymethyl)ethyl]propionamid},
   2,2'-Azobis[2-methyl-N-(2-hydroxyethyl)propionamid] und
   2,2'-Azobis(2-methylpropionamid) dihydrat.
5. Alkylazo- und andere Azoverbindungen:
   2,2'-Azobis(2,4,4-trimethylpentan),
   2,2'-Azobis(2-methylpropan),
   Dimethyl 2,2'-azobis(2-methylpropionat),
   4,4'-Azobis(4-cyanovaleriansäure) und
   2,2'-Azobis[hydroxymethyl)propionitril].

Bevorzugt weisen die erfindungsgemäßen wasserquellbaren, vernetzten, partikelförmigen Polymerisate im gequollenen Zustand eine mittlere Partikeldichte von 0,900 bis 0,999 g/cm³ und eine Kornverteilung der Partikel in einem Bereich von 0,1 bis 5,0 mm, insbesondere von 0,8 bis 3 mm auf.

Als Monomere werden vor allem Acrylsäure, Methacrylsäure, Acrylamidomethyl-propansulfonsäure, die Salze dieser Säuren, insbesondere die Alkali-, Erdalkali- und Ammoniumsalze sowie Acrylamid und Methacrylamid verwendet. Die vorstehenden Monomeren können allein zur Herstellung von Homopolymerisaten oder untereinander gemischt zur Herstellung von Copolymerisaten verwendet werden. Die genannten monomeren können auch zur Herstellung von Copolymerisaten mit weiteren wasserlöslichen Monomeren wie wasserlöslichen, polymerisationsfähigen Säuren, bevorzugt Malein-, Fumar-, Itacon- oder Vinylsulfonsäure oder den Salzen dieser Säuren eingesetzt werden. Weiter verwendbare Monomere sind Acrylnitril, Methacrylnitril, Vinylpyridin, Vinylacetat, ferner hydroxygruppenhaltige Ester polymerisationsfähiger Säuren, insbesondere die Hydroxyethyl- und Hydroxypropylester der Acryl- und der Methacrylsäure sowie aminogruppenhaltige und ammoniumgruppenhaltige Ester und Amide polymerisationsfähiger Säuren wie die Dialkylaminoester, insbesondere die Dimethyl- und die Diethylaminoalkylester der Acryl- und der Methacrylsäure, sowie die Trimethyl- und Trimethylammoniumalkylester sowie die entsprechenden Amide. In geringen Mengen können zusätzlich wasserunlösliche Monomere mit den vorstehenden Monomeren copolymerisiert werden,so beispielsweise Ester der Acryl- und/oder Methacrylsäure mit C₁-C₁₀-Alkoholen, Styrol und alkylierte Styrole. Im allgemeinen liegt der Anteil an den wasserlöslichen Monomeren bei 80 bis 100 Gew.%, bezogen auf die Gesamtheit der Monomeren. Die wasserunlöslichen (hydrophoben) Monomeren machen in der Regel 0 bis 20 Gew.% vorzugsweise bis zu 10 Gew.% der Monomeren aus. Die Polymerisation kann auch vollständig oder teilweise als Pfropfpolymerisation in Gegenwart anderer Polymersubstanzen, wie Oligo- und Polysacchariden, oder Polyvinylalkohol durchgeführt werden.

Die genannten Azoverbindungen können unter Ausnutzung der unterschiedlichen Zersetzungseigenschaften auch in Kombination eingesetzt werden. Die Konzentration des Treibmittelzusatzes in der Monomerenlösung beträgt 0,1 bis 5,0 Gew. %, vorzugsweise 0,2 bis 2,0 Gew.%.

Die wasserabsorbierenden polymeren Absorptionsmittel werden meistens unter Verwendung mindestens eines vernetzenden Monomeren erhalten. Als vernetzende Monomere werden Verbindungen verwendet, die mindestens 2 oder mehr funktionelle Gruppen, z.B. Doppelbindungen oder Epoxigruppen enthalten und in der Lage sind, sich während der Polymerisation in die wachsenden Polymerketten einzubauen. Damit entstehen im Polymerisat während der Polymerisation oder einer nachfolgenden Reaktion derfunktionellen Gruppen an verschiedenen Stellen im Polymerisat Vernetzungspunkte, die die einzelnen Polymerketten verknüpfen und bewirken, daß die Polymerpartikel in einer Flüssigkeit quellen können aber sich nicht darin auflösen. Durch die chemische Struktur des Vernetzers, die Anzahl der Vernetzungsstellen, aber auch durch ihre Verteilung in den Polymerketten werden die Eigenschaften des vernetzten Polymeren bestimmt. Als vernetzende Monomer seien bi- oder mehrfunktionelle Monomer genannt, z.B. Amide wie das Methylenbisacryl-bzw. -methacrylamid oder Ethylenbisacrylamid, femer Ester von Polyolen, wie Diacrylate oder Triacrylate z.B. Butandiol- oder Ethylenglykoldiacrylat, Trimethylolpropantriacrylat, Glycidylmethacrylat, Glycerintriglycidylether, ferner Vinylmethacrylat und Allylverbindungen wie Allyl(meth)acrylat, Triallylcyanurat, Maleinsäurediallylester, Polyallylester, Tetraallyloxiethan, Triallylamin, Tetraallylethylendiamin, Allylester der Phosphorsäure bzw. phosphorigen Säure, ferner vernetzungsfähige Monomere, wie die N-Methylolverbindungen von Amiden wie dem Methacrylamid bzw. Acrylamid und die davon abgeleiteten Äther. Der Anteil an den vernetzenden Comonomeren liegt bei 0,01 bis 10 Gew.%, bevorzugt bei 0,10 bis 2,0 Gew.%, bezogen auf die Gesamtheit der Monomeren. Bei optimalem Einbau des Vernetzers in das Polymerisat entstehen vernetzte Polymerisate, in denen Vernetzungsstellen gleichmäßig verteilt sind, so daß kaum nichtvernetzte Regionen oder gar unvernetzte, d.h. wasserlösliche, niedermolekulare Anteile im Polymerisat vorhanden sind. Eine geeignete Konzentration und gleichmäßige Verteilung der Vemetzungsstellen im Polymerisat führt zu einem Produkt, das ein optimales Rückhaltevermögen für Wasser und wäßrige Flüssigkeiten, sowie eine optimale Gelfestigkeit im gequollenen Zustand aufweist.

Die Polymerisation kann mit einem Redox-Katalysatorsystem als Initiator oder durch Photopolymerisation gestartet werden. Das Redox-Katalysatorsystem besteht üblicherweise aus zwei Komponenten, einer anorganischen oder organischen peroxidhaltigen Verbindung und einer reduzierenden Komponente, wie z.B. Sulfit, Hydrosulfit, Thiosulfat, Sulfinsäure, Ascorbinsäure und ihre Salze, Kupfer-, Eisen(II)- oder Mangansalze. Als anorganische Peroxidverbindungen können die Alkalimetall- oder Ammoniumperoxide, wie z.B. Kaliumperoxidisulfat, Wasserstoffperoxid oder Peroximono- bzw. -diphosphorsäure und ihre Salze oder organische Peroxide, wie z.B. Benzoylperoxid, Butylhydroperoxid verwendet werden. Zusätzlich zu dem üblicherweise aus zwei Komponenten bestehenden ersten Initiatorsystem können eine oder mehrere Azoverbindungen als Initiator und Treibmittel verwendet werden. Für die Photopolymerisation, die durch UV-haltiges Licht initiiert werden kann, werden sog. Photoinitiatoren wie z.B. Benzoin oder Benzoinderivate, wie Benzoinether, Benzil, Benzilketal und andere Derivate, Acryldiazoniumsalze, oder Acetophenonderivate verwendet. Auch hierbei können die verwendeten Treibmittel als Initiatoren dienen, wobei dann die Dosierung der UV-Lichtmenge für die Polymerisation maßgeblich ist. Die Mengen der peroxidhaltigen Komponente und der reduzierenden Komponente liegen im Bereich von 0,0005 bis 0,5 Gew.%, vorzugsweise von 0,001 bis 0,1 Gew.% bez. auf die Monomerlösung. Die Menge der Photoinitiatoren, die keine Azoverbindungen sind, liegen im Bereich von 0,001 bis 0,1 Gew.%, bevorzugt von 0,002 bis 0,05 Gew.% bez. auf die Monomerlösung.

Die Polymerisation kann nach den bekannten Verfahrensweisen in Lösung oder in Suspension, bevorzugt jedoch in wäßriger Lösung diskontinuierlich in einem Polymerisationsgefäß oder kontinuierlich auf einem endlosen Band, z. B. entsprechend DE-PS 35 44 770, durchgeführt werden. Bei einem praktisch adiabatischen Verlauf der Polymerisation entsteht bei entsprechender Anfangskonzentration von 15 bis 50 Gew.% der Monomeren, bezogen auf die Monomerenlösung, ein wäßriges Polymergel. Durch die Wahl der Anfangsmonomerkonzentration und einer niedrigen Starttemperatur im Temperaturbereich von 0 bis 50°C, bevorzugt von 10 bis 25°C, kann die Polymerisation so geführt werden, daß die Maximaltemperatur im entstehenden wäßrigen Polymergel im Bereich von 100 - 130°C, bevorzugt von 110-120°C, liegt. Die Polymerisation kann bei einem normalen oder erhöhten Druck, bevorzugt aber bei normalem Druck durchgeführt werden.
In der Endphase der Polymerisation hat das entstehende Polymergel eine solche Konsistenz mit ausreichender Festigkeit, um den in dieser Herstellungsphase bei der teilweisen Zersetzung des Initiators und Treibmittels entstehenden Stickstofffeinverteilt als separate Gasbläschen bei erhöhten Temperaturen von beispielsweise 100 bis 120°C, mit relativ kleinem Volumen und gegebenenfalls unter erhöhtem Druck eingeschlossen zu halten.

Das hergestellte Polymergel wird nach beendeter Polymerisation zerkleinert und bei Temperaturen von 100 bis 240°C, bevorzugt bei 120 bis 180°C getrocknet. Während der Trocknung zersetzt sich bei diesen Temperaturen der im Überschuß vorhandene und während der Polymerisation nicht zersetzte Anteil der Azoverbindung. Der freiwerdende Stickstoffwird ebenfalls in Form sehr kleiner Mikrobläschen im trockenen Polymerisat eingeschlossen und verbleibt dort. Hierbei bildet sich ein Polymerisat mit sehr poröser Struktur, dessen mittlere Gesamtdichte, der nach der Mahlung erhaltenen Polymerpartikel, unterhalb der Dichte des Polymerisats selbst liegt. Bei der Anwendung der erfindungsgemäßen Polymerisate zusammen mit Wasser oder wäßrigen Flüssigkeiten vergrößern sich während des Quellvorgangs die feinverteilten Gasvolumina, wobei im Gleichgewichtszustand ein gequollenes Hydrogel mit verringerter Gelfestigkeit entsteht. Gleichzeitig vermindert sich die mittlere Gesamtdichte der gequollenen Partikel kontinuierlich in Abhängigkeit vom Quellungsgrad, bis ein Wert kleiner als 1,0 g/cm³ erreicht wird. Die Polymerisatpartikel, die im festen, trockenen Zustand zunächst schwerer als Wasser waren, steigen dabei auf und schwimmen in gequollenem Zustand auf der Wasserbzw. Flüssigkeitsoberfläche.

Die erfindungsgemäßen Polymerisate werden in Erzeugnissen zur Absorption und/oder Retention von Wasser und/oder wäßrigen Flüssigkeiten, insbesondere von Körperflüssigkeiten, wie Urin oder Blut, bevorzugt in absorbierenden Wegwerferzeugnissen für hygienische Zwecke, wie Babymindeln, Inkontinenzartikeln, Damenbinden und Tampons sowie für Zwecke im medizinischen Bereich verwendet.

Neben der Verwendung als flüssigkeitsabsorbierende Komponente mit erhöhter Absorptionsgeschwindigkeit in Hygieneprodukten lassen sich die erfindungsgemäßen Polymerisate auch vorteilhaft für folgende Zwecke nutzbar machen.
1) Die Polymerisate können zu einer gesteuerten und gezielten Abgabe von in das Polymerisat nachträglich, beispielsweise durch Absorption eingebundenen, oder bereits von im Polymerisat enthaltenen weiteren Substanzen an andere Körper, z. B. zum Dosieren von Arzneimitteln, Nährstoffen, Insektiziden und Herbiziden in wäßrigem Medium, bevorzugt in größeren Wasserbehältern, Wasserbecken oder auf großen Wasserflächen wie in Binnengewässern oder im Meer verwendet werden, beispielsweise auch zur Abgabe von Nährstoffen in Wasserpflanzen, oder an Nährböden zur Kultivierung von Pflanzen. Die sowohl in Süßwasser als auch in
   Meerwasser schwimmfähigen Polymerisate können gezielt zur Insektenbekämpfung, z. B. gegen Mückenlarven, oder zur Herbizid-Verteilung, bevorzugt auf größeren Wasserflächen eingesetzt werden, wobei die Verteilung der im Polymerisat enthaltenen Wirksubstanzen vorteilhafterweise vor allem auf der Wasseroberfläche erfolgt.
2) Im begrenztem Maße können diese Polymerisate wegen ihrer großen Oberfläche auch zur Aufnahme und/oder Zurückhaltung von im Wasser gelösten oder dispergierten Substanzen, auch von nur teilweise wasserlöslichen oder sogar wasserunlöslichen Substanzen, die sich schwimmend auf der Wasseroberfläche befinden, benutzt werden.
3) Die Polymerisate können zur Herstellung solcher Absorptionsmaterialien verwendet werden, bei denen eine Trennung der erfindungsgemäßen Polymerisate von anderen nichtschwimmfähigen Materialien (wie z. B. Zellulose, Kunststoffe, Erde, Ton usw.) aufgrund des Unterschieds im spezifischen Gewicht der Polymerisate im aufgequollenen Zustand, z. B. beim Recycling, erfolgenden soll.

Bei der Verwendung der erfindungsgemäßen Polymerisate in Absorbermaterialien werden die Absorbermaterialien mechanisch zerkleinert und in Wasser oder wäßrige Flüssigkeiten gegeben und die Polymerpartikel im gequollenen Zustand abgetrennt.

Als Substanzen, die in das erfindungsgemäße Polymerisat eingearbeitet werden können, kommen in Frage z. B. Nährstoffe für Pflanzen, Herbizide, Fungizide, verschiedene Insektizidmittel, Desinfektionsmittel, Arzneimittel, antibakterielle Mittel, Riechstoffe zur Parfümierung, sowie andere z. B. in der DE 40 29 591 A1 genannte Substanzen. Die Einbindung der Wirkstoffe in das Polymerisat kann durch Zusatz dieser Stoffe direkt zur Monomerenlösung erfolgen, wenn der Polymerisationsverlauf dadurch nicht gestört wird. Sofern diese Substanzen die Polymerisation beeinflussen, kann ihre Einbindung während oder nach beendeter Polymerisation durch ihre Einarbeitung in das bereits erhaltene Polymergel erfolgen, wie es z.B. in DE 40 29 591 A1, DE 40 29 592 A1 oder DE 40 29 593 A1 beschrieben ist. Zusätzlich können auch Stoffe, deren Dichte niedriger als 1,0 g/cm³ ist, wie z.B. gemahlene Schaumstoffe auf Kunststoff-, bzw. Naturbasis, oder Korkmehl, in dieser Weise eingearbeitet werden. Für eine gesteuerte Abgabe der im Polymerisat enthaltenen Wirkstoffe ist es vorteilhaft, wenn die eingearbeiteten Substanzen wasserlöslich sind. Andererseits, besonders wenn eine langsame Abgabe der Wirkstoffe an andere Körper erfolgen soll, können auch wasserunlösliche oder nur teilweise wasserlösliche Substanzen verwendet werden. Eine gute Dispergierbarkeit der Wirkstoffe in Wasser kann für deren erfindungsgemäße Verwendung auch ausreichend sein.

Die Erfindung wird anhand der folgenden Beispiele erläutert.

### Beispiel 1

In einem Polymerisationsgefäß wurden zunächst in 500 g Wasser 0,9 g Methylenbisacrylamid und 192 g Acrylamid gelöst und mit 84 g Acrylsäure vermischt. Danach wurde die Monomerlösung mit 102 g Kalilauge (45 %ig) neutralisiert, auf 10°C gekühlt und mit Stickstoff ausgeblasen. Nach der Zugabe der Katalysatorlösungen (1,6 g Natriumperoxidisulfat, 0,2 g Wasserstoffperoxid (35 %ig) und 0,01 g Ascorbinsäure) und 10 g 2,2'-Azobis(2-methylpropionamidin) dihydrochlorid als Treibmittel wurde die Polymerisation gestartet. Eine gute Durchmischung der Katalysatorlösungen mit der Monomerlösung ist eine Voraussetzung für eine homogene Polymerisation im ganzen Polymerblock. Die Maximaltemperatur von 100°C (in einem gut isolierten Polymerisationsgefäß) wurde innerhalb von 10 Minuten erreicht. Nach der beendeten Polymerisation wurde das Polymergel zerkleinert, bei 120°C getrocknet und auf die gewünschte Kornfraktion gemahlen. Es entstand ein vernetztes Kaliumacrylat/Acrylamid-Copolymerisat mit poröser Struktur, die durch die eingeschlossenen Stickstoffbläschen erreicht wurde.

Die abgesiebte Kornfraktion 1000 bis 2000 µm wurde für weitere Untersuchungen verwendet:

| | |
|---|---|
| die mittlere Partikeldichte (getrocknet) | 1,30 g/cm³ |
| die mittlere Partikeldichte (gequollen) | 0,96 g/cm³ |
| Schwimmfähigkeit in Leitungswasser | 100% Partikel nach 1 h |
| | 100% Partikel nach 120 h |
| Schwimmfähigkeit in 0,9 %iger NaCl-Lösung | 100 % Partikel nach 1 h |
| | 100 % Partikel nach 120 h |
| Schwimmfähigkeit in Meerwasser | 100 % Partikel nach 1 h |
| | 100 % Partikel nach 24 h |
| | 32 % Partikel nach 120 h |

Das Aufnahmevermögen betrug 140 ml/g an Leitungswasser, 110 ml/g an 0,9 %iger NaCl-Lösung und 75 ml/g an Meerwasser.
Die mittlere Partikeldichte wurde pyknometrisch ermittelt. Die Partikeldichte der gequollenen Partikel, die vom Quellungsgrad abhängig ist, wurde nach 1 Stunde Quellzeit bestimmt.

### Beispiel 2

Unter gleichen Bedingungen wie im Beispiel 1 wurde die Polymerisation mit 20 g Treibmittel 2,2'-Azobis(2-methyl-propionamidin)dihydrochlorid durchgeführt. Nach der beendeten Polymerisation wurde das Polymergel zerkleinert, bei 120°C getrocknet und auf die gewünschte Kornfraktion gemahlen. Es entstand ein vernetztes Kaliumacrylat/Acrylamid-Copolymerisat mit poröser Struktur und eingeschlossenen Stickstoffbläschen.

Die abgesiebte Kornfraktion 1000 bis 2000 µm wurde für weitere Untersuchungen verwendet:

| | |
|---|---|
| die mittlere Partikeldichte (getrocknet) | 1,25 g/cm³ |
| die mittlere Partikeldichte (gequollen) | 0,95 g/cm³ |
| Schwimmfähigkeit in Leitungswasser | 100% Partikel nach 1 h 100% Partikel nach 120 h |
| Schwimmfähigkeit in 0,9 %iger NaCI-Lösung | 100 % Partikel nach 1 h 100%Partikel nach 120 h |
| Schwimmfähigkeit in Meerwasser | 100 % Partikel nach 1 h 100 % Partikel nach 24 h 50 % Partikel nach 120 h |

Das Aufnahmevermögen betrug 135 ml/g an Leitungswasser, 110 ml/g an 0,9 %iger NaCI-Lösung und 85 ml/g an Meerwasser.

### Beispiele 3 und 4

Unter gleichen Bedingungen wie in den Beispielen 1 und 2 wurde die Polymerisation a) mit 2.9 g und b) mit 10,0 g Treibmittel 4,4'-Azobis(4-cyanovaleriansäure) durchgeführt. Nach der beendeten Polymerisation wurde das Polymergel zerkleinert, bei 120°C getrocknet und auf die gewünschte Kornfraktion gemahlen. Es entstand ein vernetztes Kaliumacrylat/Acrylamid-Copolymerisat mit poröser Struktur und eingeschlossenen Stickstoffbläschen.

Die abgesiebte Kornfraktion 1000 bis 2000 µm wurde für weitere Untersuchungen verwendet:

| | |
|---|---|
| a) die mittlere Partikeldichte (getrocknet) | 1,40 g/cm³ |
| die mittlere Partikeldichte (gequollen) | 0,995 g/cm³ |
| b) die mittlere Partikeldichte (getrocknet) | 1,29 g/cm³ |
| die mittlere Partikeldichte (gequollen) | 0,99 g/cm³ |
| Schwimmfähigkeit in Leitungswasser | a) 35% Partikel nach 1 h b) 85% Partikel nach 1 h |

### Beispiele 5 und 6

Unter gleichen Bedingungen wie im Beispiel 3 und 4 wurde die Polymerisation mit dem Unterschied, daß ein Terpolymeriat aus Acrylamid, Acrylsäure und Acrylamido(2-methylpropan)sulfonsäure (AMPS) im Verhältnis 70/28/02 Mol% hergestellt wurde. Als Treibmittel wurde zu der Monomerlösung 5,0 g 4,4'-Azobis(4-cyanovaleriansäure) zugesetzt. Nach der beendeten Polymerisation wurde das Polymergel zerkleinert, bei 120°C getrocknet und auf die gewünschte Kornfraktion gemahlen. Es entstand ein vernetztes Kaliumacrylat/Acrylamid(AMPS-Terpolymerisat mit poröser Struktur und eingeschlossenen Stickstoffbläschen. Zur Feststellung der Reproduzierbarkeit wurde der Ansatz zweimal wiederholt.

Die abgesiebte Kornfraktion 1000 bis 2000 µm wurde für weitere Untersuchungen verwendet:

| | |
|---|---|
| a) die mittlere Partikeldichte (getrocknet) | 1,31 g/cm³ |
| die mittlere Partikeldichte (gequollen) | 0,985 g/cm³ |
| b) die mittlere Partikeldichte (getrocknet) | 1,33 g/cm³ |
| die mittlere Partikeldichte (gequollen) | 0,98 g/cm³ |
| Schwimmfähigkeit in Leitungswasser | a) 80% Partikel nach 1 h b) 82% Partikel nach 1 h |

### Beispiele 7 und 8

Unter gleichen Bedingungen wie im Beispiel 1 wurde die Polymerisation a) mit 2.9 g und b) mit 10,0 g Treibmittel 2,2'-Azobis[2-(2-imidazolin-2-yl)propan] dihydrochlorid durchgeführt. Nach der beendeten Polymerisation wurde das Polymergel zerkleinert, bei 120°C getrocknet und auf die gewünschte Kornfraktion gemahlen. Es entstand ein vernetztes Copolymerisat mit poröser Struktur und eingeschlossenen Stickstoffbläschen.

Die abgesiebte Kornfraktion 1000 bis 2000 µm wurde für weitere Untersuchungen verwendet:

| | |
|---|---|
| a) die mittlere Partikeldichte (getrocknet) | 1,49 g/cm³ |
| die mittlere Partikeldichte (gequollen) | 0,995 g/cm³ |
| b) die mittlere Partikeldichte (getrocknet) | 1,45 g/cm³ |
| die mittlere Partikeldichte (gequollen) | 0,99 g/cm³ |
| Schwimmfähigkeit in Leitungswasser | a) 45% Partikel nach 1 h b) 58% Partikel nach 1 h |

### Beispiele 9 bis 13

Unter gleichen Bedingungen wie im Beispiel 1 wurde die Polymerisation jeweils mit 2.9 g von folgenden Treibmitteln durchgeführt:
a) 2,2'-Azobis[2-(4,5,6,7-tetrahydro-1 H-1,3-diazepin-2-yl)propan] dihydrochlorid,
b) 2,2'-Azobis[2-(5-hydroxy-3,4,5,6-tetrahydropyrimidin-2-yl)propan] dihydrochlorid,
c) 2,2'-Azobis{2-[1-(2-hydroxyethyi)-2-imidazolin-2-yl]propan} dihydrochlorid und
d)2,2'-Azobis[2-methyl-N-(2-hydroxyethyl)propionamid].

Nach der beendeten Polymerisation wurde das Polymergel zerkleinert, bei 120°C getrocknet und auf die gewünschte Kornfraktion gemahlen. Es entstand ein vernetztes Copolymerisat mit poröser Struktur und eingeschlossenen Stickstoffbläschen.

Die abgesiebte Kornfraktion 1000 bis 2000 µm wurde für weitere Untersuchungen verwendet:

| | |
|---|---|
| die mittlere Partikeldichte (getrocknet) | a) 1,49 g/cm³ b) 1,54 g/cm³ c) 1,51 g/cm³ d) 1,54 g/cm³ |
| die mittlere Partikeldichte (gequollen) | a) 0,99 g/cm³ b) 0,99 g/cm³ c) 0,995 g/cm³ d) 0,995 g/cm³ |
| Schwimmfähigkeit in Leitungswasser | a) 62% Partikel nach 1 h b) 58% Partikel nach 1 h c) 45% Partikel nach 1 h b) 32% Partikel nach 1 h |

### Beispiel 14

In einem Polymerisationsgefäß wurden zunächst 256 g Acrylsäure vorgelegt, mit 335 g Wasser verdünnt und mit 209 g Natriumhydrogencarbonat neutralisiert. Danach wurde in der Monomerlösung 1,8 g Triallylamin gelöst, die Monomerlösung auf 10°C gekühlt und mit Stickstoff ausgeblasen. Nach der Zugabe der Katalysatorlösungen (0,9 g Natriumperoxidisulfat, 0,2 g Wasserstoffperoxid (35 %ig) und 0,01 g Ascorbinsäure) und 8,8 g 4,4'-Azobis(4-cyanovaleriansäure) als Treibmittel wurde die Polymerisation gestartet. Die Maximaltemperatur von 103°C wurde innerhalb von 7 Minuten erreicht. Nach der beendeten Polymerisation wurde das Polymergel zerkleinert, bei 150°C getrocknet und auf die gewünschte Kornfraktion gemahlen. Es entstand ein vernetztes Acrylsäure-Homopolymerisat, teilweise als Natriumsalz, mit poröser Struktur, die durch die eingeschlossenen Stickstoffbläschen erreicht wurde.

Die abgesiebte Kornfraktion 850 bis 2000 µm wurde für weitere Untersuchungen verwendet:

| | |
|---|---|
| die mittlere Partikeldichte (getrocknet) | 1,70 g/cm³ |
| die mittlere Partikeldichte (gequollen) | 0,99 g/cm³ |
| Schwimmfähigkeit in Leitungswasser | 86 % Partikel nach 1 h |
| | 80 % Partikel nach 24 h |
| Schwimmfähigkeit in 0,9 %iger NaCI-Lösung | 65 % Partikel nach 1 h |
| Schwimmfähigkeit in Meerwasser | 60 % Partikel nach 1 h |

### Beispiel 15

Unter sonst gleichen Bedingungen wie im Beispiel 14 wurde die Polymerisation ebenfalls mit 8,8 g Treibmittel 4,4'-Azobis(4-cyanovaleriansäure) durchgeführt, aber im Unterschied zum Beispiel 14 wurde die Acrylsäuremonomerlösung mit 310 g Kalilauge (45 %ig) neutralisiert. Nach der beendeten Polymerisation wurde das Polymergel zerkleinert, bei 150°C getrocknet und auf die gewünschte Kornfraktion gemahlen. Es entstand ein vernetztes Acrylsäure-Homopolymerisat, teilweise als Kaliumsalz, mit poröser Struktur und eingeschlossenen Stickstoffbläschen.

Die abgesiebte Kornfraktion 850 bis 2000 µm wurde für weitere Untersuchungen verwendet:

| | |
|---|---|
| die mittlere Partikeldichte (getrocknet) | 1,63 g/cm³ |
| die mittlere Partikeldichte (gequollen) | 0,97 g/cm³ |
| Schwimmfähigkeit in Leitungswasser | 100% Partikel nach 1 h |
| | 96 % Partikel nach 24 h |
| Schwimmfähigkeit in 0,9 %iger NaCI-Lösung | 95 % Partikel nach 1 h |
| Schwimmfähigkeit in Meerwasser | 80 % Partikel nach 1 h |

### Beispiele 16 bis 21

In einem Polymerisationsgefäß wurden 256 g Acrylsäure vorgelegt, mit 335 g Wasser verdünnt und mit 200 g Natronlauge (50 %ig) neutralisiert. Danach wurde in der Monomerlösung 0,77 g Triallylamin gelöst, die Monomerlösung auf 10°C gekühlt, mit Stickstoff ausgeblasen und mit gleichem Katalysatorsystem wie im Beispiel 14 die Polymerisation gestartet. Als Zusatz wurden folgende in der Tabelle 1 aufgeführten Mengen an 2,2'-Azobis(2-methylpropionamidin) dihydrochlorid (ABAH) und 4,4'-Azobis(4-cyanovaleriansäure) (ABCVS) verwendet. Die Maximaltemperaturen von 100 bis 102°C wurden innerhalb von 7 bis 12 Minuten erreicht. Nach der beendeten Polymerisation wurden die Polymergele zerkleinert, bei 150°C getrocknet und auf die gewünschte Kornfraktion gemahlen. Die hergestellten vernetzten Acrylsäure-Homopolymerisate, zum Teil als Natriumsalze, haben eine poröse Struktur, die durch die eingeschlossenen Stickstoffbläschen erreicht wurde. Zum Vergleich wurde noch ein Polymerisat mit nur 0,08 Gew.% ABAH hergestellt, das wegen der kleinen Menge an verwendetem und während der Polymerisation sich vollständig zersetztem ABAH keine poröse Struktur aufweisen konnte.

Die abgesiebten Kornfraktionen 150 bis 850 µm wurden dann zur Bestimmung der Aufnahmegeschwindigkeit und des Aufnahmevermögens nach der Teebeuteltestmethode verwendet:
Die Flüssigkeitsaufnahme von 0,2 g Prüfsubstanz wurde in einem Teebeutel nach 15, 60 und 600 Sekunden gravimetrisch ermittelt. Der Retentionswert wurde nach dem Schleudern in einer Zentrifuge, beispielweise in einer handelsüblichen Wäscheschleuder bei 1400 Upm, ebenfalls gravimetrisch ermittelt und auf 1 g Produkt umgerechnet. Als Prüfflüssigkeit wurde die wäßrige 0,9 %-ige NaCI-Lösung verwendet.

**Tabelle 1:**

| Abhängigkeit der Absorptionsgeschwindigkeit und des Absorptionsvermögens von der verwendeten ABAH- oder ABCVS-Zusatzmenge. | | | | | |
|---|---|---|---|---|---|
| | **Zusatz** | **Zusatzmenge** | **Teebeutel 15 sec** | **Teebeutel 60 sec** | **Teebeutel Retention** |
| | | **(Gew.%)** | **(g/g)** | **(g/g)** | **(g/g)** |
| **Beispiel 16** | **ABAH** | 0,28 | 10,5 | 21,1 | 34,3 |
| **Beispiel 17** | **ABAH** | 0,58 | 12,4 | 25,8 | 38,8 |
| **Beispiel 18** | **ABAH** | 1,08 | 18,2 | 34,4 | 40,2 |
| **Beispiel 19** | **ABCVS** | 0,2 | 10,2 | 16,7 | 32,9 |
| **Beispiel 20** | **ABCVS** | 0,5 | 9,7 | 17,6 | 36,7 |
| **Beispiel 21** | **ABCVS** | 1,0 | 10,1 | 27,7 | 41,0 |
| **Vergleich** | **ABAH** | 0,08 | 8,1 | 13,1 | 33,6 |

## Patentansprüche

1. Wasserquellbare, vernetzte, partikelförmige Polymerisate auf Basis von Acrylsäure und ihrer Derivate mit poröser Struktur, hohem Absorptionsvermögen und hoher Aufnahmegeschwindigkeit für Wasser und/oder Flüssigkeiten, dadurch gekennzeichnet, daß die poröse Struktur durch im Polymerisat dispergierten Stickstoff gebildet wird, der von der Zersetzung mindestens einer gleichzeitig als Polymerisationsinitiator und Treibmittel verwendeten Azoverbindung stammt und fein verteilt als separate Gasbläschen und in Form sehr kleiner Mikrobläschen im trockenen Polymerisat verteilt und eingeschlossen vorliegt, und die Polymerisatpartikel im trockenen Zustand eine Dichte über 1,0 g/cm³ und im gequollenen Zustand eine Dichte unter 1,0 g/cm³ aufweisen.

2. Wasserquellbare, vernetzte, partikelförmige Polymerisate nach Anspruch 1, dadurch gekennzeichnet, daß die Polymerisatpartikel im gequollenen Zustand eine mittlere Partikeldichte von 0,900 bis 0,999 g/cm³ aufweisen und die Kornverteilung der Partikel in einem Bereich von 0,1 bis 5 mm liegt.

3. Wasserquellbare, vernetzte, partikelförmige Polymerisate nach Anspruch 2, dadurch gekennzeichnet, daß die Kornverteilung in einem Bereich von 0,8 bis 3 mm liegt.

4. Wasserquellbare, vernetzte, partikelförmige Polymerisate nach einem der Ansprüche 1 bis 3, dadurch gekennzeichnet, daß sie aus wenigstens einem der folgenden Monomeren: Acrylsäure, Methacrylsäure, Acrylamidopropansulfonsäure, den Alkali-, Erdalkali- und Ammoniumsalzen der vorstehend genannten Säuren sowie aus Acrylamid und Methacrylamid aufgebaut sind.

5. Wasserquellbare, vernetzte, partikel förmige Polymerisate nach einem der Ansprüche 1 bis 4, dadurch gekennzeichnet, daß sie als Copolymere aufgebaut sind aus wenigstens einem der Monomeren nach Anspruch 4 und wenigstens einem der folgenden Monomeren: Acrylnitril, Methacrylnitril, Vinylpyrrolidon, einer wasserlöslichen polymerisationsfähigen Säure und ihrem Salz, einem hydroxygruppenhaltigen Ester einer polymerisationsfähigen Säure, einem aminogruppenhaltigen und ammoniumgruppenhaltigen Ester und Amid einer polymerisationsfähigen Säure und gegebenenfalls anderen, teilweise in Wasser löslichen Monomeren, in Anteilen bis zu 20 Gew.-%, bezogen auf die gesamte Monomerenmenge und aus mindestens einem vernetzend wirkenden di- oder polyfunktionellen Monomeren und gegebenenfalls einem Pfropfpolymerisat der genannten Monomeren mit Oligosacchariden und/oder Polysacchariden und/oder Polyvinylalkohol.

6. Wasserquellbare, vernetzte, partikelförmige Polymerisate nach Anspruch 5, dadurch gekennzeichnet, daß sie aus Maleinsäure, Fumarsäure, Itaconsäure und/oder Vinylsulfonsäure als wasserlöslicher polymerisationsfähiger Säure aufgebaut sind.

7. Wasserquellbare, vernetzte, partikelförmige Polymerisate nach Anspruch 5, dadurch gekennzeichnet, daß sie aus einem Hydroxyethyl- und Hydroxypropylester der Acrylsäure und/oder der Methacrylsäure als hydroxygruppenhaltigem Ester einer polymerisationsfähigen Säure aufgebaut sind.

8. Wasserquellbare, vernetzte, partikelförmige Polymerisate nach Anspruch 5, dadurch gekennzeichnet, daß sie aus einem Dialkylaminoester einer polymerisationsfähigen Säure aufgebaut sind.

9. Wasserquellbare, vernetzte, partikelförmige Polymerisate nach Anspruch 8, dadurch gekennzeichnet, daß sie aus einem Dimethyl- und Diethylaminoalkylester der Acrylsäure und/oder der Methacrylsäure aufgebaut sind.

10. Wasserquellbare, vernetzte, partikelförmige Polymerisate nach Anspruch 5, dadurch gekennzeichnet, daß sie aus einem Trimethyl- und Trimethylammoniumalkylester der Acrylsäure und/oder Methacrylsäure und einem entsprechenden Amid aufgebaut sind.

11. Wasserquellbare, vernetzte, partikelförmige Polymerisate nach einem der Ansprüche 5 bis 10, dadurch gekennzeichnet, daß sie Anteile der in Wasser teilweise löslichen Monomeren bis zu 10 Gew.-% enthalten.

12. Wasserquellbare, vernetzte, partikelförmige Polymerisate nach einem der Ansprüche 1 bis 11, dadurch gekennzeichnet, daß sie aus 80 bis 100 Gew.-%, bezogen auf die Gesamtheit der Monomeren, wasserlöslichen Monomeren und zu 0 bis 20 Gew.-% aus in Wasser nur teilweise löslichen oder unlöslichen Monomeren aufgebaut sind.

13. Wasserquellbare, vernetzte, partikelförmige Polymerisate nach Anspruch 12, dadurch gekennzeichnet, daß sie aus in Wasser nur teilweise löslichen bzw. in Wasser unlöslichen Monomeren aus Vinylacetat, Estern der Acryl- und/oder der Methacrylsäure mit C₁ bis C₁₀-Alkoholen, Styrol und/oder alkylierten Styrolen aufgebaut sind.

14. Verfahren zur Herstellung von wasserquellbaren, vernetzten, partikelförmigen Polymerisaten nach einem der Ansprüche 1 bis 13, dadurch gekennzeichnet, daß die wäßrige Monomerenlösung als Polymerisationsinitiator und Treibmittel eine oder mehrere Azoverbindungen enthält, die eine Halbwertzeit von wenigstens 10 Stunden bei einer Temperatur von 30 bis 120°C besitzen, wobei die Konzentration des Polymerisationsinitiators und Treibmittels, bezogen auf die gesamte Monomerenlösung, 0,1 bis 5,0 Gew.% beträgt und das Polymerisatgel zerkleinert und bei 100 bis 240°C getrocknet, anschließend gemahlen und das Polymerisatpulver durch Sieben klassifiziert wird.

15. Verfahren zur Herstellung von wasserquellbaren, vernetzten, partikelförmigen Polymerisaten nach Anspruch 14, dadurch gekennzeichnet, daß die zu polymerisierenden, nur teilweise wasserlöslichen Monomeren in Mengen bis zu 10 Gew.-%, bezogen auf die gesamte Monomerenmenge, eingesetzt werden.

16. Verfahren zur Herstellung von wasserquellbaren, vernetzten, partikelförmigen Polymerisaten nach einem der Ansprüche 14 bis 15, dadurch gekennzeichnet, daß die Konzentration des Polymerisationsinitiators und Treibmittel, bezogen auf die gesamte Monomerenlösung, 0,2 bis 2,0 Gew.-% beträgt.

17. Verfahren zur Herstellung von wasserquellbaren, vernetzten, partikelförmigen Polymerisaten nach Anspruch 14, dadurch gekennzeichnet, daß das Polymerisatgel bei 120 bis 180°C getrocknet wird.

18. Verfahren zur Herstellung von wasserquellbaren, vernetzten, partikelförmigen Polymerisaten nach einem der Ansprüche 14 bis 17, dadurch gekennzeichnet, daß als Polymerisationsinitiator und Treibmittel 2,2'-Azobis(2-methylpropionamidin) dihydrochlorid, 4,4'-Azobis(4-cyanovaleriansäure) oder 2,2'-Azobis[2-(4,5,6,7-tetrahydro-1H-1,3-diazepin-2-yl)propan] dihydrochlorid alleine oder im Gemisch mit anderen Azoverbindungen verwendet werden.

19. Verfahren zur Herstellung von wasserquellbaren, vernetzten, partikelförmigen Polymerisaten nach den Ansprüchen 14 bis 18, dadurch gekennzeichnet, daß die Polymerisation so geführt wird, daß im Polymergel eine Temperatur von wenigstens 100°C erreicht wird.

20. Verfahren zur Herstellung von wasserquellbaren, vernetzten, partikelförmigen Polymerisaten nach Anspruch 19, dadurch gekennzeichnet, daß die Polymerisation so geführt wird, daß im Polymergel eine Temperatur von 110 bis 120°C erreicht wird.

21. Verwendung der Polymerisate nach den Ansprüchen 1 bis 13 in Erzeugnissen zur Absorption und/oder Retention von Wasser und/oder wäßrigen Flüssigkeiten, sowie für Zwecke im medizinischen Bereich.

22. Verwendung der Polymerisate nach Anspruch 21 in Erzeugnissen zur Absorption und/oder Retention von Körperflüssigkeiten.

23. Verwendung der Polymerisate nach den Ansprüchen 21 bis 22 in Erzeugnissen zur Absorption und/oder Retention von Urin oder Blut.

24. Verwendung der Polymerisate nach den Ansprüchen 21 bis 23 in Erzeugnissen in absorbierenden Wegwerferzeugnissen für hygienische Zwecke.

25. Verwendung der Polymerisate nach Anspruch 24 in Erzeugnissen in Babywindeln, Inkontinenzartikeln, Damenbinden und Tampons.

26. Verwendung der Polymerisate nach den Ansprüchen 1 bis 13 zur Absorption und/oder Retention von Wasser und/oder einer wäßrigen Flüssigkeit, die mindestens einen Wirkstoff enthält und zur nachfolgenden Abgabe von Wasser und/oder einer Wirkstofflösung an ein umgebendes Medium, wobei als Wirkstoffe Dünge- und Pflanzenschutzmittel, mikrobizide Wirkstoffe, Herbizide, Insektizide, Nematozide, pharmazeutische und kosmetische Wirkstoffe, Farb-, Leucht- und Duftstoffe verwendet werden.

27. Verwendung der Polymerisate nach Anspruch 26 zur Abgabe von Düngemitteln oder Pflanzenschutzmitteln an Böden oder Gewässer für Pflanzenkulturen.

28. Verwendung der Polymerisate nach den Ansprüchen 1 bis 13 zur Abgabe von Insektiziden zur Insektenbekämpfung.

29. Verwendung der Polymerisate nach Anspruch 28 zur Bekämpfung von Mückenlarven auf großen Wasserflächen.

30. Verwendung der Polymerisate nach den Ansprüchen 1 bis 13 in Absorbermaterialien, dadurch gekennzeichnet, daß die Absorbermaterialien mechanisch zerkleinert und in Wasser oder wäßrige Flüssigkeiten gegeben werden und die Polymerpartikel im gequollenen Zustand abgetrennt werden.

## Claims

1. Water-swellable, crosslinked, particulate polymers based on acrylic acid and its derivatives, which polymers have a porous structure, a high absorption capacity, and a high absorption rate for water and/or liquids, characterized in that the porous structure is formed by nitrogen dispersed in the polymer, which nitrogen originates from at least one azo compound used as polymerization initiator and as blowing agent at the same time and is present finely dispersed in the form of separate gas bubbles and exceedingly small microbubbles dispersed and entrapped in the dry polymer, and that the polymer particles in dry condition have a density of more than 1.0 g/cm³ and in swollen condition have a density of less than 1.0 g/cm³.

2. The water-swellable, crosslinked, particulate polymers according to claim 1, characterized in that the polymer particles in swollen condition have an average particle density of from 0.900 to 0.999 g/cm³, and that the grain size distribution of the particles ranges from 0.1 to 5 mm.

3. The water-swellable, crosslinked, particulate polymers according to claim 2, characterized in that the grain size distribution ranges from 0.8 to 3 mm.

4. The water-swellable, crosslinked, particulate polymers according to any of claims 1 to 3, characterized in that the polymers are constituted of at least one of the following monomers: acrylic acid, methacrylic acid, acrylamidopropanesulfonic acid, the alkali, alkaline earth, and ammonium salts of the above-mentioned acids, as well as of acrylamide and methacrylamide.

5. The water-swellable, crosslinked, particulate polymers according to any of claims 1 to 4, characterized in that the polymers are built up as copolymers of at least one of the monomers according to claim 4 and at least one of the following monomers: acrylonitrile, methacrylonitrile, vinylpyrrolidone, a water-soluble polymerizable acid and its salt, a hydroxy group-containing ester of a polymerizable acid, an amino group-containing and ammonium group containing ester and amide of a polymerizable acid, and optionally other monomers partially soluble in water, in amounts of up to 20 wt.-%, relative to the total monomer quantity, and of at least one di- or polyfunctional monomer having a crosslinking effect, and optionally a graft polymer of the mentioned monomers with oligosaccharides and/or polysaccharides and/or polyvinyl alcohol.

6. The water-swellable, crosslinked, particulate polymers according to claim 5, characterized in that the polymers are constituted of maleic acid, fumaric acid, itaconic acid, and/or vinylsulfonic acid as water-soluble polymerizable acid.

7. The water-swellable, crosslinked, particulate polymers according to claim 5, characterized in that the polymers are constituted of a hydroxyethyl and hydroxypropyl ester of acrylic acid and/or methacrylic acid as hydroxy group-containing ester of a polymerizable acid.

8. The water-swellable, crosslinked, particulate polymers according to claim 5, characterized in that the polymers are constituted of a dialkylamino ester of a polymerizable acid.

9. The water-swellable, crosslinked, particulate polymers according to claim 8, characterized in that the polymers are built up of a dimethyl- and diethyl-aminoalkyl ester of acrylic acid and/or methacrylic acid.

10. The water-swellable, crosslinked, particulate polymers according to claim 5, characterized in that the polymers are built up of a trimethyl- and tri-methylammoniumalkyl ester of acrylic acid and/or methacrylic acid and a corresponding amide.

11. The water-swellable, crosslinked, particulate polymers according to any of claims 5 to 10, characterized in that the polymers include amounts of up to 10 wt.-% of the partially water-soluble monomers.

12. The water-swellable, crosslinked, particulate polymers according to any of claims 1 to 11, characterized in that the polymers are constituted of from 80 to 100 wt.-%, relative to the total monomers, of water-soluble monomers and of from 0 to 20 wt.-% of monomers which are only partially soluble or insoluble in water.

13. The water-swellable, crosslinked, particulate polymers according to claim 12, characterized in that the polymers are constituted of only partially water-soluble or water-insoluble monomers comprising vinyl acetate, esters of acrylic and/or methacrylic acid with C₁-C₁₀ alcohols, styrene and/or alkylated styrenes.

14. A process for producing the water-swellable, crosslinked, particulate polymers according to any of claims 1 to 13, characterized in that the aqueous monomer solution includes as polymerization initiator and blowing agent one or more azo compounds having a half-life of at least 10 hours at a temperature of from 30 to 120°C, the concentration of polymerization initiator and blowing agent, relative to the total monomer solution, being from 0.1 to 5.0 wt.-%, and that the polymer gel is crumbled, dried at 100-240°C, subsequently ground, and the polymer powder is classified by screening.

15. The process for producing water-swellable, crosslinked, particulate polymers according to claim 14, characterized in that the only partially water-soluble monomers to be polymerized are used in amounts of up to 10 wt.-%, relative to the total monomer quantity.

16. The process for producing water-swellable, crosslinked, particulate polymers according to any of claims 14 to 15, characterized in that the concentration of polymer initiator and blowing agent is from 0.2 to 2.0 wt.-%, relative to the total monomer solution.

17. The process for producing water-swellable, crosslinked, particulate polymers according to claim 14, characterized in that the polymer gel is dried at 120-180°C.

18. The process for producing water-swellable, crosslinked, particulate polymers according to any of claims 14 to 17, characterized in that 2,2'-azobis(2-methylpropionamidine) dihydrochloride, 4,4'-azobis(4-cyanovaleric acid), or 2,2'-azobis[2(4,5,6,7-tetrahydro-1-H-diazepin-2-yl)propane] dihydrochloride alone or in admixture with other azo compounds are used as polymerization initiator and blowing agent.

19. The process for producing water-swellable, crosslinked, particulate polymers according to claims 14 to 18, characterized in that the polymerization is conducted in such a way that a temperature of at least 100°C is reached in the polymer gel.

20. The process for producing water-swellable, crosslinked, particulate polymers according to claim 19, characterized in that the polymerization is conducted in such a way that a temperature of from 110 to 120°C is reached in the polymer gel.

21. Use of the polymers according to claims 1 to 13 in products for the absorption and/or retention of water and/or aqueous liquids as well as for applications in the medical field.

22. The use of polymers according to claim 21 in products for the absorption and/or retention of body fluids.

23. The use of polymers according to claims 21 to 22 in products for the absorption and/or retention of urine or blood.

24. The use of polymers according to claims 21 to 23 in products in absorbent disposable articles for hygienic purposes.

25. The use of polymers according to claim 24 in products in diapers for babies, incontinence articles, sanitary napkins, and tampons.

26. Use of the polymers according to claims 1 to 13 for the absorption and/or retention of water and/or an aqueous liquid including at least one active substance, and for the subsequent release of water and/or an active substance solution to a surrounding medium, with fertilizers and plant protection agents, microbicidal substances, herbicides, insecticides, nematocides, pharmaceutic and cosmetic active substances, dyes, luminescent substances, and perfuming agents being used as active substances.

27. The use of polymers according to claim 26 for the release of fertilizers or plant protection agents to soils or water for plant cultures.

28. Use of the polymers according to claims 1 to 13 for the release of insecticides for insect control.

29. The use of polymers according to claim 28 to control mosquito larvae on large surfaces of water.

30. Use of the polymers according to claims 1 to 13 in absorber materials, characterized in that the absorber materials are crumbled mechanically and placed into water or aqueous liquids, and that the polymer particles are removed in swollen condition.

## Revendications

1. Polymères particulaires, réticulés, gonflables à l'eau, à base d'acide acrylique et de ses dérivés, à structure poreuse, à pouvoir d'absorption élevé et à haute vitesse d'absorption de l'eau et/ou de liquides, caractérisés en ce que la structure poreuse est formée par de l'azote dispersé dans le polymère, qui provient de la décomposition d'au moins un composé de type azo utilisé simultanément comme amorceur de polymérisation et agent porogène et se répartit dans le polymère sec sous la forme de très petites microbulles et se présente à l'état inclus, et en ce que les particules du polymère présentent, à l'état sec, une masse volumique supérieure à 1,0 g/cm³ et, à l'état gonflé, une masse volumique inférieure à 1,0 g/cm³.

2. Polymères particulaires, réticulés, gonflables à l'eau, suivant la revendication 1, caractérisés en ce que les particules du polymère présentent, à l'état gonflé, une masse volumique moyenne des particules de 0,900 à 0,999 g/cm³ et la granulométrie des particules se situe dans la plage de 0,1 à 5 mm.

3. Polymères particulaires, réticulés, gonflables à l'eau, suivant la revendication 2, caractérisés en ce que la granulométrie se situe dans la plage de 0,8 à 3 mm.

4. Polymères particulaires, réticulés, gonflables à l'eau, suivant l'une quelconque des revendications 1 à 3, caractérisés en ce qu'ils sont constitués d'au moins un des monomères suivants: acide acrylique, acide méthacrylique, acide acrylamidopropanesulfonique, les sels de métaux alcalins, de métaux alcalino-terreux et d'ammonium des acides susmentionnés, comme aussi acrylamide et méthacrylamide.

5. Polymères particulaires, réticulés, gonflables à l'eau, suivant l'une quelconque des revendications 1 à 4, caractérisés en ce que les copolymères sont constitués d'au moins l'un des monomères suivant la revendication 4 et d'au moins l'un des monomères suivants: l'acrylonitrile, le méthacrylonitrile, la vinylpyrrolidone, un acide polymérisable soluble dans l'eau et son sel, un ester contenant des radicaux hydroxyle d'un acide polymérisable, un ester et un amide contenant des radicaux amino et contenant des radicaux ammonium d'un acide polymérisable et éventuellement d'autres monomères partiellement solubles dans l'eau, en proportions s'élevant jusqu'à 20% en poids, par rapport à la quantité totale des monomères, et d'au moins un monomère di- ou polyfonctionnel à activité réticulante et éventuellement d'un polymère de greffage des monomères précités avec des oligosaccharides et/ou des polysaccharides et/ou le poly(alcool vinylique).

6. Polymères particulaires, réticulés, gonflables à l'eau, suivant la revendication 5, caractérisés en ce qu'ils sont constitués d'acide maléique, d'acide fumarique, d'acide itaconique et/ou d'acide vinylsulfonique, à titre d'acide polymérisable soluble dans l'eau.

7. Polymères particulaires, réticulés, gonflables à l'eau, suivant la revendication 5, caractérisés en ce qu'ils sont constitués d'un ester hydroxyéthylique et hydroxypropylique de l'acide acrylique et/ou de l'acide méthacrylique, à titre d'ester contenant des radicaux hydroxyle d'un acide polymérisable.

8. Polymères particulaires, réticulés, gonflables à l'eau, suivant la revendication 5, caractérisés en ce qu'ils sont constitués d'un ester aminodialkylique d'un acide polymérisable.

9. Polymères particulaires, réticulés, gonflables à l'eau, suivant la revendication 8, caractérisés en ce qu'ils sont constitués d'un ester diméthylaminoalkylique et diéthylaminoalkylique de l'acide acrylique et/ou de l'acide méthacrylique.

10. Polymères particulaires, réticulés, gonflables à l'eau, suivant la revendication 5, caractérisés en ce qu'ils sont constitués d'un ester triméthyl- et triméthylammoniumalkylique de l'acide acrylique et/ou de l'acide méthacrylique et d'un amide correspondant.

11. Polymères particulaires, réticulés, gonflables à l'eau, suivant l'une quelconque des revendications 5 à 10, caractérisés en ce qu'ils contiennent des proportions des monomères partiellement solubles dans l'eau s'élevant jusqu'à 10% en poids.

12. Polymères particulaires, réticulés, gonflables à l'eau, suivant l'une quelconque des revendications 1 à 11, caractérisés en ce qu'ils sont constitués de 80 à 100% en poids, par rapport à la totalité des monomères, de monomères solubles dans l'eau et de jusqu'à 0 à 20% en poids de monomères insolubles dans l'eau ou seulement partiellement solubles dans l'eau.

13. Polymères particulaires, réticulés, gonflables à l'eau, suivant la revendication 12, caractérisés en ce qu'ils sont constitués de monomères insolubles dans l'eau ou seulement partiellement solubles dans l'eau, formés d'acétate de vinyle, d'esters de l'acide acrylique et/ou de l'acide méthacrylique d'alcools en C₁ à C₁₀, de styrène et/ou de styrènes alkylés.

14. Procédé de préparation de polymères particulaires, réticulés, gonflables à l'eau, suivant l'une quelconque des revendications 1 à 13,
caractérisé en ce que la solution aqueuse des monomères contient, à titre d'amorceur de polymérisation et d'agent porogène, un ou plusieurs composés du type azo, qui possède une durée de demi-vie d'au moins 10 heures, à une température de 30 à 120°C, où la concentration de l'amorceur de polymérisation et de l'agent porogène, par rapport à la solution totale des monomères, varie de 0,1 à 5,0% en poids et le gel de polymère est broyé et séché à 100-240°C, puis il est moulé et la poudre de polymère subit un classement, à travers des tamis ou cribles.

15. Procédé de préparation de polymères particulaires, réticulés, gonflables à l'eau suivant la revendication 14, caractérisé en ce que les monomères à polymériser et seulement partiellement solubles dans l'eau, s'utilisent en proportions allant jusqu'à 10% en poids, par rapport à la quantité totale des monomères.

16. Procédé de préparation de polymères particulaires, réticulés, gonflables à l'eau suivant l'une quelconque des revendications 14 à 15,
caractérisé en ce que la concentration de l'amorceur de polymérisation et de l'agent porogène varie de 0,2 à 2,0% en poids, par rapport à la solution totale des monomères.

17. Procédé de préparation de polymères particulaires, réticulés, gonflables à l'eau suivant la revendication 14, caractérisé en ce que l'on sèche le gel de polymère à 120-180°C.

18. Procédé de préparation de polymères particulaires, réticulés, gonflables à l'eau suivant l'une quelconque des revendications 14 à 17,
caractérisé en ce que l'on utilise, à titre d'amorceur de polymérisation et d'agent porogène, du dichlorhydrate de 2,2'-azobis(2-méthylpropionamidine) , de l'acide 4,4'-azobis(4-cyanovalérianique) ou du dichlorhydrate de 2,2'-azobis[2-(4,5,6,7-tétrahydro-1H-1,3-diazépine-2-yle)propane], seuls ou en mélange à d'autres composés du type azo.

19. Procédé de préparation de polymères particulaires, réticulés, gonflables à l'eau suivant l'une quelconque des revendications 14 à 18,
caractérisé en ce que l'on conduit la polymérisation en une manière telle que l'on atteigne une température d'au moins 100°C dans le gel de polymère.

20. Procédé de préparation de polymères particulaires, réticulés, gonflables à l'eau suivant la revendication 19, caractérisé en ce que l'on conduit la polymérisation de manière à ce que l'on atteigne une température de 110 à 120°C, dans le gel de polymère.

21. Utilisation des polymères suivant l'une quelconque des revendications 1 à 13, dans des articles destinés à l'absorption et/ou la rétention d'eau et/ou de liquides aqueux, comme aussi dans certains buts dans le domaine médical.

22. Utilisation des polymères suivant la revendication 21, dans des articles destinés à l'absorption et/ou la rétention de liquides corporels.

23. Utilisation des polymères suivant l'une quelconque des revendications 21 à 22, dans des articles destinés à l'absorption et/ou la rétention d'urine ou de sang.

24. Utilisation des polymères suivant l'une quelconque des revendications 21 à 23, dans des articles destinés à la confection d'articles absorbants jetables pour des buts hygiéniques.

25. Utilisation des polymères suivant la revendication 24, dans des articles de couches pour bébés, des articles pour l'incontinence, des tampons et des serviettes hygiéniques.

26. Utilisation des polymères suivant l'une quelconque des revendications 1 à 13, pour l'absorption et/ou la rétention d'eau et/ou d'un liquide aqueux, qui contient au moins un principe actif et pour la libération subséquente d'eau et/ou d'une solution d'un principe actif à un milieu environnant, où l'on utilise, à titre de principes actifs, des agents servant d'engrais et des agents de phytoprotection, des principes actifs microbicides, des herbicides, des insecticides, des nématocides, des principes actifs pharmaceutiques et cosmétiques, des colorants, des luminophores et des parfums.

27. Utilisation des polymères suivant la revendication 26, pour la libération d'engrais ou d'agent de phytoprotection à la terre ou aux eaux pour la culture de plantes.

28. Utilisation des polymères suivant l'une quelconque des revendications 1 à 13, pour la libération d'insecticides, en vue de lutter contre les insectes.

29. Utilisation des polymères suivant la revendication 28, pour la lutte contre les larves de moucherons ou de moustiques sur de grandes surfaces d'eau.

30. Utilisation des polymères suivant l'une quelconque des revendications 1 à 13, dans des matériaux absorbants, caractérisée en ce que l'on broie mécaniquement les matériaux absorbants et on les ajoute à de l'eau ou des liquides aqueux et on sépare les particules de polymères à l'état gonflé.
